# EUROPEAN PATENT SPECIFICATION

(11) **EP 3 140 825 B1**
(45) Date of publication and mention of the grant of the patent: **26.06.2019**
(21) Application number: 15728173.4
(22) Date of filing: 05.05.2015
(51) Int. Cl.: G08G 1/017, G06K 9/32, G07B 15/06

(54) **AUTHENTICATION METHOD FOR VEHICULAR NUMBER PLATE RECOGNITION**
AUTHENTIFIZIERUNGSVERFAHREN FÜR ZUR NUMMERNSCHILDERKENNUNG BEI EINEM FAHRZEUG
PROCÉDÉ D'AUTHENTIFICATION POUR RECONNAISSANCE DE PLAQUE D'IMMATRICULATION DE VÉHICULE

(30) Priority: 08.05.2014 IT VE20140027
(43) Date of publication of application: 15.03.2017
(73) Proprietor: DBA Lab S.p.A., 31050 Villorba (TV) (IT)
(72) Inventor: DE BETTIN, Francesco, I-32045 Santo Stefano di Cadore (BL) (IT)
(74) Representative: Bruni, Giovanni
(86) International application number: PCT/IB2015/053262
(87) International publication number: WO 2015/170245

(56) References cited:
- EP-A2- 2 249 288
- US-A1- 2004 167 861
- US-A1- 2009 268 030

## Description

The typical field of application of the present invention relates the recognition of vehicle number plates.

The prior art suggests a number of tools that perform said automatic recognition of vehicle number plates.

These instruments are generally based on techniques for automatic recognition of images, and in particular on so-called OCR (Optical Character Recognition) techniques. In general, the recognition of license plates according to the prior art occurs when a vehicle passes through an area in which there is a video coverage taken by cameras installed with an appropriate positioning. The images taken by the cameras are automatically processed and, in a first phase, the performed analysis just provides for the fast identification of the presence of a license plate within the image. The image processing then continues by the application of OCR techniques to the image detail that contains the license plate and, if the quality of the picture is sufficiently good, the characters (letters and numbers) of the plate are easily recognized.

At this stage, the most sophisticated tools also compare other details of the plates with templates of plate of a large number of countries, and they are therefore able to recognize the nationality of the vehicle and even if the analyzed plate is roughly counterfeited.

The quality of the cameras used for this kind of application is generally sufficient to operate, with the necessary resolution, in various lighting conditions. Furthermore, it is possible to equip the camera system with additional control subsystems; so that there are systems that control the orientation of the cameras and their focus in order to cover, with the resumption of optimal images, a larger area with the same number of cameras. In short, it can be said that the prior art offers tools able to perform the recognition of license plates of vehicles entering a specific area in which some cameras adequate to support such application were previously positioned.

This kind of tools is widely used, for example, to monitor accesses in "Limited Traffic Zone" (LTZ) of many city centers: in this application, the license plates ot all vehicles entering these LTZ are recognized and, if some of these are not present in a list of license plates allowed to transit across these LTZ, for these vehicles, will be initiated the process that will lead to the generation of a sanction to the owner of the vehicle that came into that ZTL without having permission.

The main application limit of these tools of plate recognition (excluding cost issues, where it is always possible to find room for improvement in order to increase the market) lies in offering robustness with respect to the counterfeiting of the plates.

The processes of image analysis, can reduce the extent of this kind of problem through a more and more detailed analysis of the plates, in order to sense many details increasingly significant and useful for the unmasking of counterfeit plates, however, the limitation of applicability of the instrument is structural, in fact a plaque is always a simple enough object to be counterfeited, and therefore the application of the tools of plate recognition can be exploited only in cases where the risks related to a falsification of a plaque are acceptable.

For example, if a vehicle with a perfectly counterfeited license plate enters a LTZ of a city center, the risk you run is to not be able to impose the appropriate punishment to the transgressor. Such a risk is evidently considered acceptable.

It is different the case in which a driver wants to benefit from payment services billed through the recognition of the license plate of his vehicle. An interesting example could be the payment for the fuel at a service station. From the technical point of view it might be possible to envisage a payment service, managed by an intermediary (e.g. a bank), which provides that a vehicle is recognized through the plate number when it approaches to a fuel dispenser, whether the number plate was included in a list of license plates enabled to such service, the dispenser may be automatically unlocked to refuel, and payment may be completed by such intermediary who then may charge that to the owner of the vehicle, identified through the recognition of the plate number (the payment could take place, for example, according to a procedure analogous to that which occurs with payments made by credit card).

In this last application, compared with the regulated access in the LTZ, the risk associated with the possibility that an impostor is being supplied with fuel at the expense of another person, simply imitating the plate, is a risk that could considerably affect the overall attractiveness of the payment service.

In general, in fact, any payment service is the more attractive to the consumer, the more it is reliable against the risk of fraud.

EP 2 249 288 A2 discloses a. vehicle detection system for detecting the presence of at least part of a vehicle in image data. Information such as the brand or the color of the vehicle can be used for the vehicle identification. Tracking of the vehicle occupants and the vehicle itself can be performed with the help of personal radio communication systems such a mobile telephone. The system may further be associated with an automatic number plate recognition (ANPR) system.

US 2009/268030 A1 discloses a system having cell phone tracking integrated with video surveillance of persons and vehicles. The system may have one or more cameras for surveillance of a subject. The system may also have a detection mechanism with one or more antennas for picking up radio frequency signals from a cell phone which provide direction, location and/or identity of the source. The system may have one or more OCR readers, phone number extractors, video analytics, watchlist checkers, processors, databases, interfaces, and so forth, for obtaining information about the subject. Identifying information originating from the cell phone signals may provide corroboration of license plate information.

US 2004/167861 A1 discloses an electronic toll management that includes capturing an image of a vehicle triggered by a transaction event representing an interaction between tlie vehicle and a facility, determining a vehicle identifier based on the captured image, checking whether the vehicle identifier matches a vehicle identifier provided by a party, and notifying the party of an occurrence of a match.

The present invention is as set out in the appended claims.

Aim of the present invention then consists in indicating an authentication method of the recognition of a plate number of a vehicle that can be carried out before using the information associated with said recognition to enable subsequent operations.

Another aim of the present invention is to indicate a flexible enough method which allows to provide at least two levels of authentication: a first level in which the holder of the vehicle, whose plate number has been recognized, does not need to do anything, and a second level in which a confirmation action by such holder is requested.

Finally, another aim of the present invention is to indicate an authentication method that can be applied with the necessary speed so as to allow its application to "real time" services.

These and other aims are reached by implementing a method which exploits other information which are available for the authentication of the number plate recognition. In particular, the first piece of information which is certainly always available, in addition to the sequence of letters and numbers that compose the license plate number to be authenticated, consists in the position of the vehicle. In fact, the cameras showing the images from which the recognition of plates' number is performed are installed in known locations, and can film just the plaques that are in a well-defined physical space.

Authentication consists in certifying, with a reasonable degree of certainty, the coincidence between the "authentic" license plate corresponding to the recognized plate number and the physical plate on which the automatic recognition has been done.

Therefore the authentication can be carried on through the assessment (which has to be performed through a process independent from the process of optical recognition of license plate) that the "authentic" license plate corresponding to the recognized plate number is actually in the location where the recognition took place.

If said assessment is performed with a high degree of reliability, an erroneous authentication can happen only in the infrequent case in which a "false" license plate and the "authentic" one are in the same place.

It is therefore clear that, thanks to said assessment, the possibility of frauds is greatly reduced; in fact, a potential fraudster could counterfeit only the license plates while they are in his vicinity.

From the foregoing, it is clear that the technical problem of authentication of a license plate recognition, using the just described method, consists in the localization ot the "authentic" license plate (which corresponds to the recognized plate number).

The solution to the above mentioned technical problem, namely to locate the "authentic" plate, can be traced back to a new simpler problem which consists to prove that something that is associated with the "authentic" license plate (that which corresponds to the recognized plate number) is located right in the place where the plate number recognition took place.

The above proposed method therefore provides that, following a recognition of a plate number, action is taken to verify that another object (other than the plate), which must however be associated with said "authentic" license plate, is actually located in the place of recognition and, if that verification is successful, it can therefore be certified, with reasonable accuracy, the authenticity of the recognized license plate number.

The adopted approximations affect the level of authentication security: authentication is therefore incorrect in the case where a counterfeited license plate number is recognized in the place where there is still an object associated with the "authentic" license plate of which the recognized license plate number is a counterfeit.

Said objects associated with the "authentic" license plate for acknowledgment may, in theory, be many and, of course, they are chosen among those objects that, with high probability, can be in the same place of the "authentic" license plate corresponding to the plate number to be authenticated.

The most natural association is between the plate and the vehicle itself to which the plate is attached. A vehicle can be described by brand, model and color; and there are many well-known techniques that allow for the recognition of the brand and model of a vehicle with high reliability. For example exist laser scanners that can reconstruct the three dimensional shape of a vehicle that passes through a passage equipped with said scanners; comparing the detected three-dimensional shape with a collection of templates associated with all possible models of vehicle, the model of the vehicle that has passed through said passage can be identified. The color of the vehicle is rather easy to recognize from simple video footage, possibly the same analyzed for the recognition of the plate number. Said video footage could eventually be used for the recognition of the brand and model of the vehicle (thereby avoiding the resort to the installation of systems of scanners with laser technology), even if this is a type of video recognition definitely more complex than that for the plate number recognition.

The important concept to underline is that it is possible to equip a location so as to perform via the computer both the recognition of a plate number and the recognition of brand, model and color of a vehicle which enters a specific area with said plate. It is therefore possible, always by computer, to state that a particular plate number is recognized simultaneously in the same place where there is also the vehicle, defined in terms of brand, model and color, previously associated to the "authentic" plate corresponding to the recognized plate number.

The authenticity certification of a license plate recognized following the verification set out above, runs the risk to be erroneous only in the case in which a counterfeited plate is applied to a vehicle of the same brand, model and color of the one associated to the corresponding "authentic" license plate.

An even more secure authentication level can be provided through direct authentication by the holder of the recognized license plate. In fact, through the recognition of a plate number, it is possible to date back to the owner of the same, and with the help of now widespread media (e.g. by means of a communication over a mobile radio network), it is possible to require to the holder of recognized plate number a confirmation action proving that he is actually doing something related to the reason why said recognition of his plate occurred.

The authentication method just outlined in its essential steps presents also other aspects of particular importance that are better described hereinafter.

The authentication method according to the present invention can in fact be effectively applied by the aid of other existing systems or systems that can be arranged specially for the implementation of the method itself.

In particular, a function of "authentication center" is essential: it is a function which, in practice, is executed by a computer. In the following, therefore, the expression "Authentication Server" will be used in order to refer both to the physical system (for example a computer) that is supporting the function of "authentication center" and to the functionality itself.

In addition to the presence of said "Authentication Server", it is recommended the availability of the coverage of a mobile network in the same area where the video coverage is provided for the automatic number plate recognition (it is important to note that the availability of mobile coverage is nowadays a widespread prerogative so that it can be taken for granted).

Ultimately, the method requires that users who wish to benefit from services based on the authenticated recognition ot the plate number ot their vehicle have to provide a contact for communication over a radio-mobile network. This latter prerogative is particularly important in the case in which the method requires a confirmation of authentication by the user, but it is even more important in the case, which is extremely interesting, in which said second object for acknowledgment, which has to be localized for authentication of the plate number recognition, is a radio-mobile terminal (instead of a recognized vehicle, defined in terms of brand, model and color). In fact, the actual diffusion of personal radio-mobile terminals is pervasive and therefore a mobile terminal (or a small number of mobile terminals) can be chosen as the object for acknowledgment to be associated to an "authentic" license plate in order to implement the authentication method described in this invention.

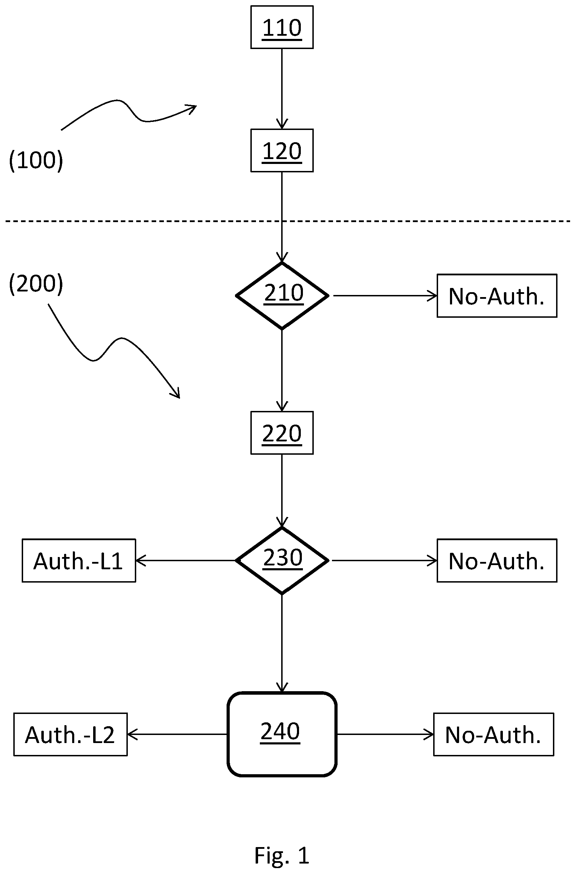

The availability of all these system components allows to implement the authentication method of automatic recognition of license plates according to the teachings of the present invention that will be better and further described in the following description, in the appended claims which make up an integral part of the same description and by the illustration of some practical embodiments described as a way of non-limiting examples in the following and in the accompanying drawing of Figure 1 which shows a flow chart which summarizes the macro phases of a typical implementation of the method disclosed in the present invention.

The method represented in Figure 1 explicitly makes reference to the case in which the authentication is based on the location of a radio mobile terminal, chosen as the object for acknowledgment. This choice is a slightly more complex case than the case in which the object for acknowledgment is the vehicle to which the license plate is associated and, above all, is well adapted to implement the previously mentioned authentication method based on two security levels. However, the case in which the object for acknowledgment is different from a radio mobile terminal (e.g. a vehicle defined in terms of brand, model and color) is a simplified case of application of the same process shown in the block diagram of Figure 1.

In the upper part of Figure 1, in the area indicated with the number 100, the locally executed steps are represented while, in the lower region of the figure indicated by the number 200, below the dashed line, they are represented the steps that are managed through the functionality of the "Authentication Server", and these steps are not necessarily carried out locally where the recognition of the license plate occurs.

Number 110 indicates a block associated to a phase which consists in automatic recognition of the number plate of a vehicle and realized with known systems.

Number 120 indicates the first phase of the authentication process which consists in transmitting to the so called "Authentication Server" both the recognized plate number (the sequence of numbers and letters of the plate, and possibly the nationality and type of license plate) and the information about the place and time where the recognition took place.

As soon as such information are in the "Authentication Server", a first check is carried out: said first check is indicated in Figure 1 with the number 210, and consists in determining whether the recognized plate number belongs to the set of plates for which an authentication service is active.

The phase 210 highlights an important constraint of the conceived method: namely the authentication can take place only for those plates for which an authentication service was previously activated.

If said recognized plate were not in said set of plates for which an authentication service is active, authentication would end unsuccessfully. On the other hand, in the case in which said plate recognized was present in said set of plates, the authentication process would continue with the next step which is indicated with the number 220.

Phase 220, is one of the most characterizing stages for the method conceived according to the teachings of the present invention and consists in the localization of a radio mobile terminal associated to the license plate to be authenticated.

In fact, the method foresees that, at the "Authentication Server", in the set of plates for which an authentication service is active, it is available an association between each license plate and at least one radio-mobile address.

In the most usual case, said radio-mobile address is a telephone number associated with a SIM (Subscriber Identification Module) card.

Should however be noted as mobile services are constantly changing. The standard that currently represents the state of the art is the LTE (Long Term Evolution) standard which, as the name that identifies it suggests, is a standard for which continuous developments are foreseen. In particular it is envisaged the definition of different identities (and therefore different syntax to define the mobile contact) to refer to different types of terminals that can be connected to the mobile radio networks. For example, is expected in the next few years an impressive development of so-called MTC (Machine Type Communication), i.e. communications between machines: these communications are characterized by some distinctive features, so it is expected that the terminals (and the SIM cards) that will support such communications between machines will be contacted through specific addresses and through specific semantics of contact.

In particular, the concept of SIM will be understood more broadly, and will not necessarily continue to be associated with a card (or cards) as we usually conceive it now.

Ultimately, an embodiment of a plate recognition authentication according to the teachings of the present invention, provides that the authentic plate is associated to a mobile telephone number.

The introduction of the phase 220 is essential in the definition of the inventive idea as it changes the technical problem previously identified. By the association of a mobile address to an "authentic" plate, the problem of localization of said "authentic" plate becomes the problem of the location of the mobile terminal to which the said "authentic" plate is associated.

The rationale underlying the above change of the technical problem is easy to understand, since mobile terminals are a personal item that everyone always carries with him, so a user driving a vehicle, in all likelihood, will bring his own mobile terminal. The method described in this invention thus allows to authenticate the license plates' recognition of those vehicles driven by "owners" who, when activating the service of authentication of their license plates' recognition, must have notified to the "Authentication server" a mobile address on which basing their authentication.

An essential peculiarity of all radio-mobile services consists in the fact that all radio-mobile terminals which are active in a wide geographic network are localized. In fact, if a terminal is not localized, any communication towards that terminal could not be forwarded, unless making a "broadcast" communication directed to all terminals (it is clear that this last option is a non-sense as it would immediately saturate the network).

Therefore, it is clear that the localization of each radio-mobile terminal active (switched on, with a valid subscription and under radio coverage) is known with a certain degree of precision, which is sufficient to route correctly the communications directed to said terminal. It is also clear that such information (about the terminal localization) is available at the management systems of the mobile operator that operates the service associated with the SIM of the considered terminal.

Phase 220 consists in the localization of the terminal (i,e. the phone number) associated with the license plate which has to be authenticated by the "Authentication Server". It is clear that the different procedures able to perform said localization may be divided into two groups:
1) the "Authentication Server" accesses the information which is available at the mobile operator, and consequently the localization is immediate;
2) the "Authentication Server" can not access the location information that is available at the mobile operator and can only use the address (then the "Authentication Server" can just contact the terminal).

The first case can be arranged through a series of agreements between the various mobile operators and the subject who operates the "Authentication Server" (i.e. the entity that performs authentication). It should be said that, according to the evolutionary scenarios of mobile services, a lot of new location-based services will be soon introduced in the market of mobile communications, and therefore the localization is expected to become a typical service offered by mobile operators to third parties.

Also the second case is however quite interesting from the application point of view. Phase 220 can be carried out even without recourse to the location information that is in the availability of the mobile operator. In fact, the "Authentication Server" can establish a contact with the terminal, send a message and, via said message, a pre-installed application (for example pre-installed at the time of activation of the authentication service) may be executed; and said application can simply transmit to the "Authentication Server" the localization of the terminal itself.

There are several ways by which a mobile terminal can localize itself. For example, the localization could be achieved through the analysis of the received radio base stations or, more directly, the terminal itself could incorporate a satellite locator (e.g. GPS or "Galileo"); in this latter case, it is noted that the integration of said locators in mobile terminals is now very common since they are indispensable also for many other extremely popular applications.

Ultimately, although it can be performed in many different ways, phase 220 can be summarized as a phase in which the "Authentication Server" acquires the information about the location of a terminal associated with the license plate to be authenticated.

In the variant case in which the object: for acknowledgment associated with the authentic license plate corresponding to the recognized plate number to be authenticated is not a radio-mobile terminal, but a vehicle defined through some of its characteristics, phase 220 is a simple verification step to check that the vehicle associated with the authentic license plate is present in the area where recognition took place. This check can easily be done since the "Authentication Server", in addition to the data related to the recognized number plate, can also examine information relating to vehicles recognized within the monitored area, eventually including the characteristics of the vehicle bearing the recognized license plate; said information is easily retrievable locally with the aid of known systems as it has been explained earlier in the present description.

The next phase is shown in Figure 1 with the number 230 and it is a decision phase in which, if the recognized license plate is in a place where it is present the object for acknowledgment too, authentication is attested: said object for acknowledgment may be a radio-mobile terminal or a predetermined vehicle defined through some of its features. Said phase 230 is now further detailed in the case of application in which the authentication method is based on the detection of the presence or absence of a radio-mobile terminal in the area recognition.

Being available both the location information of the plate on which the recognition occurred and the location information of a mobile terminal associated with the "authentic" plate corresponding to recognized license plate, the "Authentication Server" performs a check that the two objects are located in the same place (of course the verification will have the margins of accuracy that derive from the precision of the two localizations). The outcome of this check can determine three different progresses of the method according to the invention.
- The case in which the terminal and the recognized license plate are localized in different places will determine an outcome of "Authentication denied". In this case, any service based on license plate recognition should take into account that it was not possible to authenticate the recognized license plate and therefore it will develop consequently.

On the other hand, in the event in which the terminal and the recognized plate are localized in the same place, two other cases may occur:
- direct positive authentication,
- continuation of the authentication process with explicit confirmation by the holder.

In the case of direct positive authentication, the assumption is that the mere fact that the recognized license plate and the terminal associated with authentic plate are in the same place, constitutes a proof of authenticity of the plate.

In fact any counterfeiter, in addition to the counterfeited plate, should also have taken the mobile terminal associated with authentic plaque, or would have to forge a plate of a vehicle that was occasionally close, assuming that the "owner" of the authentic plate had its active mobile terminal nearby.

It is clear that these cases are very unlikely and still very complex to be implemented. In addition, authentication based on a check associated with the mobile terminal is extremely safe because the authentication that is performed on the mobile terminal is very reliable (it is not easy to clone a SIM card).

The authentication implemented as described above is also very user friendly. In fact, the user doesn't need to perform any operation; he just need to carry with him his own terminal (with its SIM), the one associated with the authentication service of his license plate.

An interesting variant of the described method comes from the observation that, while the mobile terminal is a personal device, a vehicle can be used by multiple users: for example, a car can be used by all members of a family. In this case, it can be allowed the association of a number of radio mobile addresses to a single license plate, and the authentication can be successful if at least one of the terminals associated with the "authentic" plate is located in the same place of the recognized plate.

The observation that the radiomobile address is a personal characteristic, while a vehicle can be shared among multiple persons, allows to introduce an interesting potentiality of the method: in fact the method can easily handle a level of selectivity in the authentication, making it possible only if the vehicle is conducted by an "authorized user". In fact, the authentication is successful only when there is the simultaneous presence (in the place of recognition of the plate) of at least one of the radiomobile addresses belonging to people previously stored on the database in the "Authentication Sever". Such potentiality offered by the method, based on the detection of the presence of radiomobile terminals, also allows the management of fleets of vehicles that can be assigned to different users: e.g. a fleet of company cars at the disposal of employees and consultants, or even fleets of cars used for the rental. In these cases it is possible to create appropriate credentials to access the database at the "Authentication Server", thus to allow an authorized person, to dynamically associate a particular radio-mobile address to a particular plate number, together with the period that a particular vehicle is assigned to a particular user.

It is also to be noted that the radio-mobile address might not necessarily be a personal address: as mentioned earlier, in fact, in the coming years, it is expected a widespread communication among machines. In particular it is expected that all the vehicles are mandatory equipped with a radio-mobile vehicular terminal in order to support automatically an emergency call in case of accident: a call in which, among other things, the position of the vehicle at the time of the accident have to be communicated.

Said terminal, associated with the vehicle with the main purpose of supporting the emergency call, may also be the one used for the authentication process according to the teachings of the present invention. The use of such a terminal would also result particularly safe as it is easily associated with anti-theft systems and, consequently, the authentication service may be so arranged as to be robust with respect to cases of theft; anyway the integration of the authentication method in cases of theft of the vehicle is not a subject of the present invention, it is sufficient here just to highlight that the method can be so arranged as to be able to offer guarantees also in the case of theft of the vehicle.

A further consideration about the safety of the method against attempts of fraud can be carried out in relation to the case where the localization of the terminal is performed through a software application installed on the terminal itself; in this case, the user may disable the application (or directly disable the authentication service) when he expects to have no need for authentication and, doing so, he would introduce an additional safety factor preventing any illegal authentication by anyone.

The described method is flexible enough to also provide for an additional level of authentication security.

A further phase that allows to perform an authentication based on explicit confirmation by the holder of the plate to be authenticated is shown in Figure 1, and it is indicated with the number 240.

Said explicit confirmation is easily implementable by exploiting the fact that the described method also provides for the establishment of a communication session between the "Authentication Server" and the mobile terminal on which the authentication itself is executed.

Phase 240 provides that the terminal associated with the license plate to be authenticated is contacted by the "Authentication Server", and it transmits a message to the terminal. Via said message, similarly to the request for the localization of the terminal, a software application installed in advance can be activated, and it can propose to the user the insertion of a security code known by the user himself. This code can be a secret code or a code containing characters communicated to the user during the process of authentication request. For example, in the case of an authentication request in order to unlock a fuel dispenser, the required confirmation code might contain a part that the user can acquire from the dispenser itself. Of course, in this case, such code must be known to the "Authentication Server" which will compare it with the code inserted by the user: this is not a problem because the "Authentication Server" can be connected to the fuel dispenser as it is connected to the plate number recognition system (obviously both the fuel dispenser and the plate number recognition system are local systems, they are in the same place and both connected to the "Authentication Server"). In the just mentioned example a further variant is evident: in fact, phase 240 can substitute and make unnecessary some steps of the preceding phases 220 and 230.

In fact it is sufficient that the "Authentication Server" identifies the association between the terminal and the recognized license plate. At this point the localization of the terminal is not strictly necessary, as the terminal can be reached in order to forward the confirmation of authentication request without any localization by the "Authentication Server". The localization is in fact automatically verified by the fact that the user will be asked to enter a code which can be known only if he is in a certain place.

Phase 240 is thus a decision-making phase that asks the user to transmit a key. That key can prove his identity and his willingness to confirm the authentication. In addition, such key, when it is dependent from the place in which it is inserted, since it is communicated to the user directly in the place where he is, it can also prove the presence of said user in a certain place.

The verification of correctness of the inserted key thus allows to certify the authentication of the license plate recognition, or to deny authentication of the recognition, in the case of incorrect insertion of the key (or if the key is not inserted within a predetermined time limit).

An authentication method that includes such a phase 240 is then very robust, since the "owner" of the plate must personally contirm the authentication through his personal terminal and by entering a security code.

In extreme synthesis, said method is characterized in that it includes at least the following essential operational phases:
a. sending to an "Authentication Server", by a local system of license plate recognition, an authentication request in which, together with said request, they are transmitted both the recognized number plate and an information that allows to identify the place where the recognition took place;
b. check that the recognized license plate corresponds to an "authentic" license plate belonging to the set of plates for which an authentication service is active;
c. in the case of a plate belonging to the set of license plates for which an authentication service is an active, association to said license plate of at least one physical object for acknowledgment;
d. verification that said physical object for acknowledgment is present in an area including the place where the license plate recognition occurred, at the same time of said recognition.

It is clear that said physical objects for acknowledgment associated with the "authentic" plates must be chosen among objects usually traveling together with said "authentic" plates; and then favorite objects for the implementation of the method taught by the present invention are: the vehicle to which the authentic license plate is attached or one or more mobile terminals belonging to the people who habitually travel on board of said vehicle.

The authentication of the license plate recognition based on the adoption as an object for acknowledgment (as specified in point "c." of the aforementioned method) of a terminal for radiomobile communications, provides that the terminal is active in a network for radio-mobile communications. It is essential that said terminal for radio-mobile communications is activated following an authentication procedure independent from the authentication process of the plate recognition. This is what commonly happens in all cellular radio-mobile networks in which the terminals are activated on a network after a very reliable authentication procedure, based on the fact that the terminal shall incorporate a hardware identification module (SIM - Subscriber Identification Module).

Moreover, as explained above, it is underlined that the verification referred to in point "d." can be performed in many ways and with many practical variants, without departing from the fundamental inventive concept of the method which is based on the fact that the recognition of a plate number is certified as authentic, if this recognition takes place in a place where it is also possible to attest the presence of a radio-mobile terminal active on a radio-mobile network, and said terminal (which, to be active on that radio-mobile network, must have completed a successful authentication procedure) had previously been associated with the license plate to be authenticated.

The main advantages of the present invention consist in the fact that a method such as the one described allows to meet the purposes it was conceived for.

In particular, in the case of method based on the adoption, as the object for acknowledgment, of a terminal for radio-mobile communications, it is possible to benefit of the widespread coverage of radio-mobile cellular networks, whereby this authentication method of plate recognition is in fact applicable in all places where there is a cellular radio-mobile coverage.

Furthermore, the fact of using, in the authentication method, a very efficient geographical telecommunications network able to support real-time communications (such as radiomobile networks are), allows to conceive said authentication service by a centralized "Authentication Server", placed remotely rather than in the areas where plate recognition happens, and said "authentication Server" can be implemented using a computer powerful enough and fast enough to perform the authentication procedure in such a short time that it could be considered, in the user perspective, a real time authentication.

As already said above, the method is subject to numerous variants, and the process can be enriched with different accessories to be used in many different application contexts. A very interesting application context is the context of electronic payments. There are in fact many cases in which a payment can be associated to the transit of a vehicle in a specific area; one such case is the case of refueling: in fact a vehicle, to be refueled, must necessarily approach a fuel dispenser.

It is very easy to perform the recognition of plate numbers of vehicles that are fueling (this is already happening regularly for security reasons); the "owner" of the vehicle could associate the license plate of his vehicle to his credit card and the debit transaction could be subject to the authentication of license plate recognition carried out according to the teachings of the present invention.

The above example just refers to a process of electronic payment but does not enter into details. In fact, it is not the specific object of the present invention to identify new methods of electronic payment. This description just aims to describe an authentication method of vehicle license plate recognition and to highlight the benefits of application. In fact, the identification of a vehicle via its license plate is particularly interesting as all vehicles have a univocal license plate and systems for license plates recognition are mature systems that do not require any adaptation action on vehicles.

Other systems of recognition and identification of a vehicle require installation of appropriate equipment on board of the vehicles, and they are based on the adoption of communications standards that are slow to be widely adopted.

The authentication service described in this invention can instead be benefited by any holder of a vehicle (which will necessarily be a weblog vehicle) who has a subscription to a service of mobile telecommunications and a credit card. Therefore, it is a service that, if properly managed, could be activated with a lot of flexibility and offered virtually to the entire population living in the more developed countries.

For example, a traveler who is planning a trip to a foreign country, could enable the fuel payment service on his credit card, and associate, for authentication, his own radio-mobile number, and the service could be activated just for the short period of time in which the traveler is staying in said foreign country he is visiting.

As already said, but it is useful to repeat once again, the just described invention lends itself to numerous variants that may offer additional advantages compared to those previously mentioned, but these further variants can be made by the man skilled in the art without departing from the invention as it is clear from the present description and in the claims appended hereto.

## Claims

1. Authentication method for vehicle number plate recognition comprising at least the following preliminary phases initiated by an owner of a vehicle:
a. entering at least one authentic vehicle number plate in an archive of authentic vehicle number plates for which is provided a service of authentication of a vehicle number plate recognition,
b. and associating to said number plate at least one radio-mobile address corresponding to at least one radio-mobile terminals, accessible via a radio-mobile network through its corresponding radio-mobile address, and said at least one radio-mobile terminal frequently circulate in association with the vehicle to which the authentic plate corresponding to said authentic plate number is attached;
and at least the following operating phases performed to carry out said service of authentication of a number plate recognition:
c. automatically optically recognizing, by a local license plate recognition system, a vehicle number plate;
d. sending to an authentication center, by said local license plate recognition system, an authentication request containing the recognized vehicle plate number;
e. sending to said authentication center, by said local license plate recognition system, together with said authentication request, information relating to the place and the time where the recognition of the vehicle number plate took place;
f. checking by the authentication center that such recognized vehicle plate number corresponds to the number of an authentic plate previously entered in said archive of authentic plates for which an authentication service is provided;
g. in the case of the recognized vehicle plate number corresponding to an authentic plate which belongs to said archive of authentic plates for which an authentication service is provided, acquiring, by the authentication center, at least one radio-mobile address corresponding to said at least one radio-mobile terminal which was previously associated to said recognized vehicle plate number, as in phases "a." and "b.";
h. checking by the authentication center that, at the same time in which the recognition of the vehicle number plate happened, said at least one radio-mobile address corresponding to said at least one radio-mobile terminal is localized in a location area of the mobile network in which it is registered, the location area being given by the analysis of the received radio base stations or by a satellite locator incorporated in said at least one radio-mobile terminal, and said location area comprises the place where the recognition of the vehicle number plate was achieved,
i. in the case of positive check in phase h., associating by the authentication center to the recognized plate number an additional piece of information, which states that the recognized vehicle number plate is authentic.

2. Method according to the preceding claim in which said radio-mobile terminal is localized by said authentication center by accessing to the location information made available by the radio-mobile operator who operates said radio-mobile address.

3. Method according to claim 1 wherein said radio-mobile terminal receives a message from said authentication center.

4. Method according to claim 3 wherein said radio-mobile terminal sends to said authentication center information processed or inserted locally.

5. Method according to claim 1 wherein an authorized user, having proper credentials to access data stored in said authentication center, is able to insert in said authentication center a new radio-mobile address through which a new radio-mobile terminal is reachable, and said new radio-mobile terminal is associated to a real plate belonging to said set of plates for which an authentication service is active; or said authorized user is able to remove a radio-mobile address previously stored in said authentication center.

## Patentansprüche

1. Authentifizierungsverfahren für die Fahrzeugnummernschilderkennung , **dadurch gekennzeichnet, dass** es zumindest folgende Vorstufen umfasst, die durch einen Eigentümer eines Fahrzeugs initiiert worden sind:
a. Eingabe von mindestens einen authentischen Fahrzeugnummernschild in ein Archiv von authentischen Fahrzeugnummernschildern, für das ein Authentifizierungsdienst für eine Fahrzeugnummernschilderkennung bereitgestellt wird,
b. und Zuordnen von einen oder mehreren Kennungen zu dem genannten Nummernschild, die einem oder mehreren Funkmobilendgeräten entsprechen, die über ein Funkmobilnetz durch eine Funkmobiladresse erreichbar sind, und das eine oder die mehreren Funkmobilendgeräte häufig in Verbindung mit dem Fahrzeug zirkulieren, an dem das echte Schild entsprechend der genannten authentischen Nummernschilder angebracht ist;
und mindestens folgenden Betriebsphasen, die ausgeführt werden, um den Authentifizierungsdienst einer Nummernschilderkennung durchzuführen:
c. automatisches Erkennen, durch ein lokales Nummernschilderkennungssystem, eines Fahrzeugnummernschildes;
d. Senden an ein Authentifizierungszentrum, durch das genannte lokale Nummernschilderkennungssystem, einer Authentifizierungsanfrage, die das erkannte Fahrzeugnummernschild enthält;
e. Senden dem genannten Authentifizierungszentrum, durch das genannte lokale Nummernschilderkennungssystem, zusammen mit der genannten Authentifizierungsanfrage, einer Information über einen Ort und einen Zeitpunkt, bei denen die Erkennung des Fahrzeugnummernschildes stattgefunden hat;
f. Überprüfen durch das Authentifizierungszentrum, ob dieses erkannte Fahrzeugnummernschild der Nummer eines echten Schildes entspricht, die zuvor in das genannte Archiv von authentischen Schildern eingegeben wurde, für die ein Authentifizierungsdienst bereitgestellt wird;
g. im Falle dass das erkannte Fahrzeugnummernschild einem echten Schild, das dem genannten Archiv von authentischen Schildern gehört, für das ein Authentifizierungsdienst bereitgestellt wird, Empfangen, durch das Authentifizierungszentrum, von mindestens einen Funkmobiladresse, die dem genannten mindestens einem Funkmobilendgerät entspricht, das zuvor mit dem genannten erkannten Fahrzeugnummernschild, wie bei den Phasen "a." und "b" zugeordnet war;
h. Überprüfen, durch das Authentifizierungszentrum, dass gleichzeitig mit der Erkennung des Fahrzeugnummernschildes, die genannte mindestens eine Funkmobiladresse entsprechend den mindestens einen Funkmobilendgerät in einem Standortsbereich der mobilen Netzwerkes, in dem es registriert ist, lokalisiert ist, wobei der Standortsbereich durch die Analyse der empfangenen Funkmobilbasisstationen oder durch einen in das mindestens ein Funkmobilendgerät eingebauten Satellitenortungsgerät gebildet ist und der genannte Standortsbereich den Ort umfasst, an dem die Erkennung des Fahrzeugnummernschildes erreicht wurde,
i. bei einer positiven Kontrolle in Phase h., Zuordnen einer zusätzlichen Information durch das Authentifizierungszentrum zum erkannten Nummernschild, das bestätigt dass das erkannte Fahrzeugnummernschild authentisch ist.

2. Verfahren nach dem vorhergehenden Anspruch, wobei das genannte Funkmobilendgerät durch das genannte Authentifizierungszentrum lokalisiert wird, indem auf die Standortinformationen zugegriffen wird, die von dem Funkmobilbetreiber, der die genannte Funkmobiladresse betreibt, zur Verfügung gestellt werden.

3. Verfahren nach Anspruch 1, wobei das genannte Funkmobilendgerät eine Nachricht von dem genannten Authentifizierungszentrum empfängt.

4. Verfahren nach Anspruch 3, wobei das genannte Funkmobilendgerät an das Authentifizierungszentrum Informationen sendet, die lokal verarbeitet oder eingefügt werden.

5. Verfahren nach Anspruch 1, wobei ein autorisierter Benutzer, der über geeignete Anmeldeinformationen verfügt, um auf die genannten in dem Authentifizierungszentrum gespeicherten Daten zuzugreifen, eine neue Funkmobiladresse in das genannte Authentifizierungszentrum einfügen kann, über die ein neues Funkmobilendgerät erreichbar ist, und das genannte neue Funkmobilendgerät entweder einem echten Nummernschild zugeordnet ist, die zu dem genannten Nummernschildsatz gehört, für den ein Authentifizierungsdienst aktiv ist; oder der genannte autorisierte Benutzer in der Lage ist, eine zuvor im genannten Authentifizierungszentrum gespeicherte Funkmobiladresse zu entfernen.

## Revendications

1. Procédé d'authentification pour la reconnaissance d'une plaque d'immatriculation de véhicule **caractérisé en ce qu'**il comprend au moins les phases préliminaires suivantes initiées par un propriétaire de véhicule:
a. introduire au moins une plaque d'immatriculation de véhicule authentique dans une archive de plaques d'immatriculation de véhicule authentiques pour lesquelles est prévu un service d'authentification d'une reconnaissance de plaque d'immatriculation de véhicule,
b. et associer à ladite plaque d'immatriculation un ou plusieurs identifiants correspondant à un ou plusieurs terminaux de radiotéléphone, accessibles par un réseau de radiotéléphone par une adresse de radiotéléphone, et lesdits un ou plusieurs terminaux de radiotéléphone circulant fréquemment en association avec le véhicule auquel est attachée la plaque réelle correspondant audit numéro de plaque authentique;
et enfin les phases d'exploitation suivantes sont effectuées pour effectuer ledit service d'authentification d'une reconnaissance de plaque d'immatriculation:
a. reconnaître automatiquement, par un système de reconnaissance de plaque d'immatriculation local, une plaque d'immatriculation de véhicule;
b. envoyer à un centre d'authentification, par ledit système de reconnaissance de plaque d'immatriculation local, une demande d'authentification contenant le numéro de plaque du véhicule reconnu;
c. envoyer audit centre d'authentification, par ledit système de reconnaissance de plaque d'immatriculation local, avec ladite demande d'authentification, une information concernant un lieu et une heure où la reconnaissance de la plaque d'immatriculation de véhicule a eu lieu;
f. vérification par le centre d'authentification que ce numéro de plaque de véhicule reconnu correspond au numéro d'une plaque réelle précédemment introduit dans lesdites archives de plaques authentiques pour lesquelles un service d'authentification est fourni;
g. dans le cas où le numéro de plaque du véhicule reconnu correspond à une plaque réelle appartenant auxdites archives de plaques authentiques pour lesquelles un service d'authentification est fourni, acquisition, par le centre d'authentification, d'au moins une adresse de radiotéléphone correspondant audit au moins un terminal radio-mobile qui était précédemment associé au numéro de plaque du véhicule reconnu, comme dans les phases "a." et "b.";
h. vérifier par le centre d'authentification qui, en même temps, dans lequel la reconnaissance de la plaque d'immatriculation du véhicule est arrivé, ladite au moins une adresse radio-mobile correspondant audit au moins un terminal radio-mobile qui est localisé dans une zone de localisation du réseau mobile dans lequel il est enregistré, la zone de localisation étant déterminée par l'analyse des stations de base radio reçues ou par un localisateur de satellite incorporé dans ledit au moins un terminal de radiotéléphone, et ladite zone de localisation comprend le lieu où la reconnaissance de la plaque d'immatriculation du véhicule a été effectuée,
i. en cas d'un contrôle positif dans la phase h., associer par le centre d'authentification au numéro de plaque reconnu une information supplémentaire indiquant que la plaque d'immatriculation du véhicule reconnue est authentique.

2. Procédé selon la revendication précédente, dans lequel ledit terminal de radiotéléphone est localisé par ledit centre d'authentification en accédant aux informations de localisation rendues disponibles par l'opérateur de radiotéléphone qui exploite ladite adresse de radiotéléphone.

3. Procédé selon la revendication 1, dans lequel ledit terminal de radiotéléphone reçoit un message dudit centre d'authentification.

4. Procédé selon la revendication 3, dans lequel ledit terminal de radiotéléphone envoie audit centre d'authentification des informations traitées ou insérées localement.

5. Procédé selon la revendication 1, dans lequel un utilisateur autorisé, disposant des informations d'identification appropriées pour accéder aux données stockées dans ledit centre d'authentification, est capable d'insérer dans ledit centre d'authentification une nouvelle adresse de radiotéléphone par laquelle un nouveau terminal de radiotéléphone est accessible, et ledit nouveau terminal de radiotéléphone est associé à une plaque réelle appartenant au dit ensemble de plaques pour lequel un service d'authentification est actif; ou ledit utilisateur autorisé est capable de supprimer une adresse de radiotéléphone préalablement stockée dans ledit centre d'authentification.
